# EUROPEAN PATENT APPLICATION

(11) **EP 2 938 139 A1**
(43) Date of publication of application: **28.10.2015**
(21) Application number: 13865447.0
(22) Date of filing: 31.07.2013
(51) Int. Cl.: H04W 52/38, H04W 16/24, H04W 84/12, H04W 88/08

(54) **WIRELESS COMMUNICATION DEVICE, CONNECTION CONTROL METHOD AND CONNECTION CONTROL PROGRAM**

(30) Priority: 19.12.2012 JP 2012277131
(71) Applicant: Kabushiki Kaisha Toshiba, Minato-ku Tokyo 105-8001 (JP)
(72) Inventor: NAMBA, Yoshiki, Tokyo 105-8001 (JP); WATANABE, Hiroyuki, Tokyo 105-8001 (JP); MORI, Toshiki, Tokyo 105-8001 (JP); IIDA, Yasutaka, Tokyo 105-8001 (JP)
(74) Representative: Hoffmann Eitle
(86) International application number: PCT/JP2013/070800
(87) International publication number: WO 2014/097674

(57) **Abstract**

A wireless communication apparatus (10) includes a transmission frame generator (123), a storage memory (122), and a controller (126). The transmission frame generator (123) generates one of a management frame, a control frame, and a data frame for transmitting information via a wireless channel. The storage memory (122) stores a first transmission output level at which the management frame is transmitted, and a second transmission output level which is higher than the first transmission output level and at which the control frame and the data frame are transmitted. The controller (126) reads out, from the storage memory (122), a transmission output level corresponding to a type of a transmission frame generated by the transmission frame generator (123), and transmits, at the read-out transmission output level, the frame generated by the transmission frame generator (123).

## Description

### Technical Field

Embodiments described herein relate generally to a wireless communication apparatus for distributing information to a communication terminal by wireless communication, and a connection control method and connection control program which are used by the apparatus.

### Background Art

In public areas such as stations and airports, and commercial facilities such as restaurants, a public wireless LAN (Local Area Network) open to the public has become widespread. Along with popularization of a public wireless LAN open to the public, a service for improving the user convenience by distributing various kinds of information such as an advertisement and/or the operation information of a train, airplane, or the like using a wireless LAN system is spreading. In this type of service, it is effective to distribute information to a place optimum for the user of the information to utilize it. To do this, it is necessary to distribute the information to a limited narrow area such as an area in front of a store. To attract the user of information, it is necessary to distribute a large amount of information such as a high-quality video and image in addition to information such as text and a still image obtained by thinning out an information amount.

In a general wireless LAN system, an access point controls to communicate, at a high transmission rate, with a terminal which is positioned at a short distance from the access point and exits in an area where the radio wave strength is high, and to communicate, at a low transmission rate, with a terminal which exists in an area far away from the access point, where the radio wave strength is low. For example, assume that a terminal passes through the communicable area of the access point. In this case, immediately after the terminal enters the communicable area of the access point, the access point wirelessly communicates with the terminal at a low transmission rate. As the terminal comes closer to the access point, the access point wirelessly communicates with the terminal at a higher transmission rate. As the terminal is farther away from the access point, the access point wirelessly communicates with the terminal at a lower transmission rate.

### Citation List

### Patent Literatures

Patent Literature 1: Jpn. Pat. Appln. KOKAI Publication No. 2008-60994

### Summary of Invention

### Technical Problem

As described above, in a service of distributing various kinds of information such as operation information and/or an advertisement, it is necessary to distribute a large amount of information to attract a user in a limited area such as an area in front of a store. A conventional wireless communication apparatus serving as an access point can limit a communicable area to a limited area such as an area in front of a store by decreasing the transmission power level. However, limiting the communicable area narrows an area where communication can be performed at a high transmission rate. Also, since the radio wave strength is low immediately after a terminal enters the communicable area, the access point communicates with the terminal at a low transmission rate immediately after a communication connection is established. When the communicable area is limited as described above, it is difficult to maintain a communication connection to a terminal at a high transmission rate, and thus it may be impossible to transmit a large amount of information to a terminal which passes through the communicable area.

The present invention has as its object to provide a wireless communication apparatus capable of transferring a large amount of data to a terminal within a short time during which the terminal passes through a communicable area, and a connection control method and connection control program which are used by the apparatus.

### Solution to Problem

According to an embodiment, a wireless communication apparatus includes a transmission frame generator, a storage memory, and a controller. The transmission frame generator generates one of a management frame, a control frame, and a data frame for transmitting information via a wireless channel. The storage memory stores a first transmission output level at which the management frame is transmitted, and a second transmission output level which is higher than the first transmission output level and at which the control frame and the data frame are transmitted. The controller reads out, from the storage memory, a transmission output level corresponding to a type of a transmission frame generated by the transmission frame generator, and transmits, at the read-out transmission output level, the frame generated by the transmission frame generator.

### Brief Description of Drawings

[FIG. 1] FIG. 1 is a block diagram showing the functional arrangement of a wireless LAN system including an access point according to an embodiment.
[FIG. 2] FIG. 2 is a block diagram showing the functional arrangement of the AP shown in FIG. 1.
[FIG. 3] FIG. 3 is a sequence chart when the AP and an STA which are shown in FIG. 1 establish a connection and the STA receives a data frame transmitted by the AP.
[FIG. 4] FIG. 4 is a flowchart illustrating the operation of a wireless LAN controller when the AP shown in FIG. 1 transmits a frame signal in accordance with a signal transmitted by the STA.
[FIG. 5] FIG. 5 is a view showing a communicable area formed when the AP shown in FIG. 1 transmits a beacon.
[FIG. 6] FIG. 6 is a view showing a communicable area formed when the AP shown in FIG. 1 transmits an ACK frame.
[FIG. 7] FIG. 7 is a block diagram showing another example of the functional arrangement of the AP shown in FIG. 2.
[FIG. 8] FIG. 8 is a block diagram showing still another example of the functional arrangement of the AP shown in FIG. 2.
[FIG. 9] FIG. 9 is another sequence chart when the AP and STA which are shown in FIG. 1 establish a connection and the STA receives a data frame transmitted by the AP.

### Description of Embodiments

An embodiment will be described below with reference to the accompanying drawings.

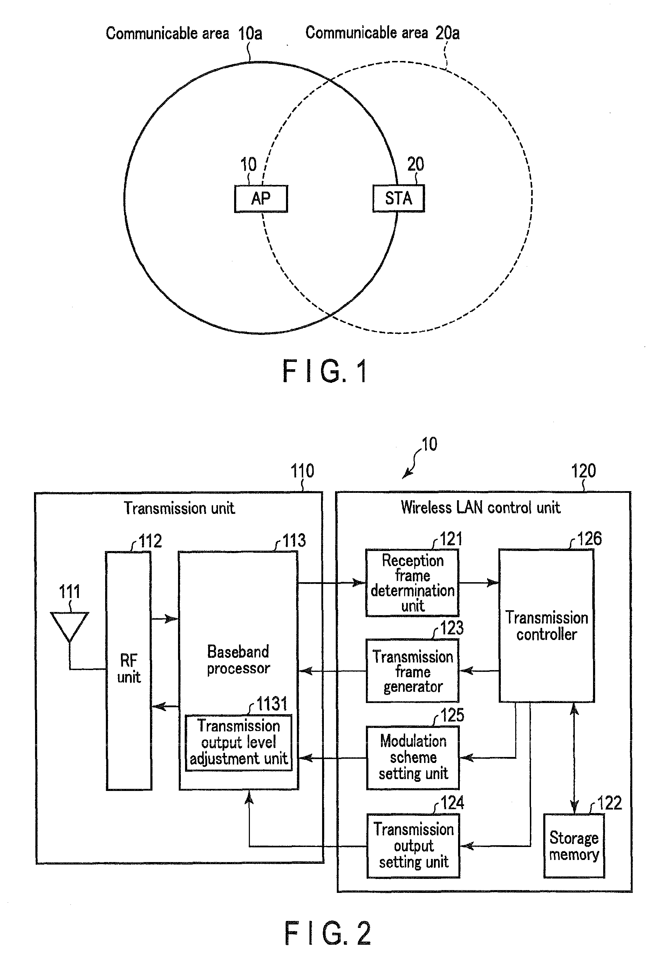

FIG. 1 is a block diagram showing the functional arrangement of a wireless LAN system including an access point (AP) 10 as a wireless communication apparatus according to this embodiment. The wireless LAN communication system shown in FIG. 1 includes, for example, the AP 10 complying with the IEEE802.11g standard, and a station (STA) 20 as a wireless communication terminal complying with the IEEE802.11g standard. The AP 10 and STA 20 perform wireless communication complying with the IEEE802.11g standard.

FIG. 2 is a block diagram showing the functional arrangement of the AP 10 shown in FIG. 1. The AP 10 shown in FIG. 2 includes a transmission unit 110 and a wireless LAN control unit 120.

The transmission unit 110 includes an antenna unit 111, an RF (Radio Frequency) unit 112, and a baseband processor 113.

The antenna unit 111 receives a wireless signal transmitted by the STA 20 or the like. The antenna unit 111 transmits, as a wireless signal, a signal supplied from the RF unit 112.

The RF unit 112 generates a baseband signal by performing power amplification and frequency conversion for the wireless signal received by the antenna unit 111. The RF unit 112 outputs the generated baseband signal to the baseband processor 113. The RF unit 112 also performs power amplification and frequency conversion for a baseband signal supplied from the baseband processor 113, and outputs the processed signal to the antenna unit 111.

The baseband processor 113 demodulates the baseband signal supplied from the RF unit 112 by using a predetermined demodulation scheme, and outputs the demodulated demodulation signal to the wireless LAN control unit 120.

The baseband processor 113 includes a transmission output level adjustment unit 1131. The baseband processor 113 modulates a frame signal supplied from the wireless LAN control unit 120 by using a modulation scheme set by the wireless LAN control unit 120, and causes the transmission output level adjustment unit 1131 to adjust a power level in accordance with an adjustment amount set by the wireless LAN control unit 120, thereby outputting the resultant signal as a baseband signal to the RF unit 112.

The wireless LAN control unit 120 includes, for example, a CPU (Central Processing Unit), and an area such as a ROM (Read Only Memory) or a RAM (Random Access Memory) for storing data and programs to be used by the CPU to execute processing. The wireless LAN control unit 120 has the following arrangement by causing the CPU to execute a connection control program. That is, the wireless LAN control unit 120 includes a reception frame determination unit 121, a storage memory 122, a transmission frame generator 123, a transmission output setting unit 124, a modulation scheme setting unit 125, and a transmission controller 126.

The reception frame determination unit 121 determines the frame type of the demodulation signal supplied from the baseband processor 113. The reception frame determination unit 121 outputs, to the transmission controller 126, reception frame information indicating the type of the reception frame obtained by the determination processing.

The storage memory 122 stores, in advance, transmission output information for setting a transmission output level for each frame type. For example, the storage memory 122 stores, in advance, the first transmission output information for instructing x% of the maximum transmission output level, and the second transmission output information for instructing y% of the maximum transmission output level, which is higher than the transmission output level set based on the first transmission output information.

Also, the storage memory 122 stores, in advance, modulation scheme information for setting a modulation scheme for each frame type. For example, the storage memory 122 stores, in advance, the first modulation scheme information for modulating a management frame, and the second modulation scheme information for modulating a control frame and data frame.

The transmission frame generator 123 creates a management frame, control frame, or data frame in accordance with an instruction from the transmission controller 126. The transmission frame generator 123 outputs a generated frame signal to the baseband processor 113.

The transmission output setting unit 124 sets an adjustment amount for the transmission output level adjustment unit 1131 of the baseband processor 113 so that the transmission output level of a wireless signal transmitted by the antenna unit 111 becomes equal to a transmission output level according to transmission output information supplied from the transmission controller 126.

The modulation scheme setting unit 125 sets a modulation scheme for the baseband processor 113 so as to perform modulation in accordance with the modulation scheme information supplied from the transmission controller 126.

The transmission controller 126 decides a frame signal to be generated by the transmission frame generator 123 every preset period. Alternatively, the transmission controller 126 decides a frame signal to be generated by the transmission frame generator 123 by referring to the reception frame information supplied from the reception frame determination unit 121. The transmission controller 126 outputs an instruction to the transmission frame generator 123 to generate the decided frame signal.

For example, the transmission controller 126 causes the transmission frame generator 123 to generate a beacon as a management frame every preset period. When receiving a management frame "Authentication" from the terminal, the transmission controller 126 causes the transmission frame generator 123 to generate a management frame "Authentication" and a control frame "Ack". When receiving a management frame "Association request" from the terminal, the transmission controller 126 causes the transmission frame generator 123 to generate a management frame "Association response" and a control frame "Ack". Furthermore, the transmission controller 126 causes the transmission frame generator 123 to generate a plurality of data frames with respect to information such as a video or image stored in advance.

The transmission controller 126 reads out transmission output information corresponding to the type of the frame signal from the storage memory 122. For example, if it is decided to cause the transmission frame generator 123 to generate a management frame, the transmission controller 126 reads out the first transmission output information from the storage memory 122. Alternatively, if it is decided to cause the transmission frame generator 123 to generate a control frame or data frame, the transmission controller 126 reads out the second transmission output information from the storage memory 122. The transmission controller 126 outputs the read-out first or second transmission output information to the transmission output setting unit 124.

The transmission controller 126 reads out modulation scheme information corresponding to the type of the frame signal from the storage memory 122. For example, if it is decided to cause the transmission frame generator 123 to generate a management frame, the transmission controller 126 reads out the first modulation scheme information from the storage memory 122. Alternatively, if it is decided to cause the transmission frame generator 123 to generate a control frame or data frame, the transmission controller 126 reads out the second modulation scheme information from the storage memory 122. The transmission controller 126 outputs the read-out first or second modulation scheme information to the modulation scheme setting unit 125.

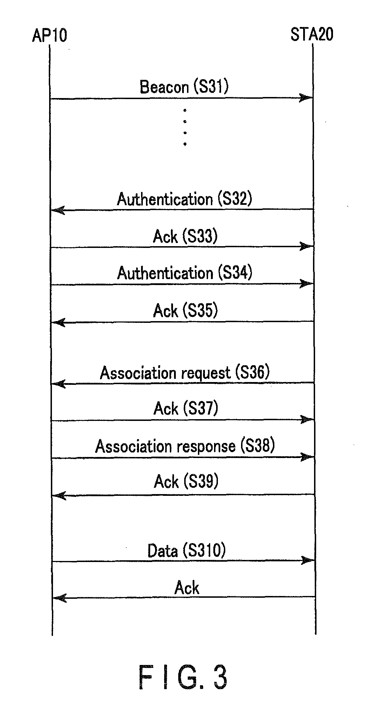

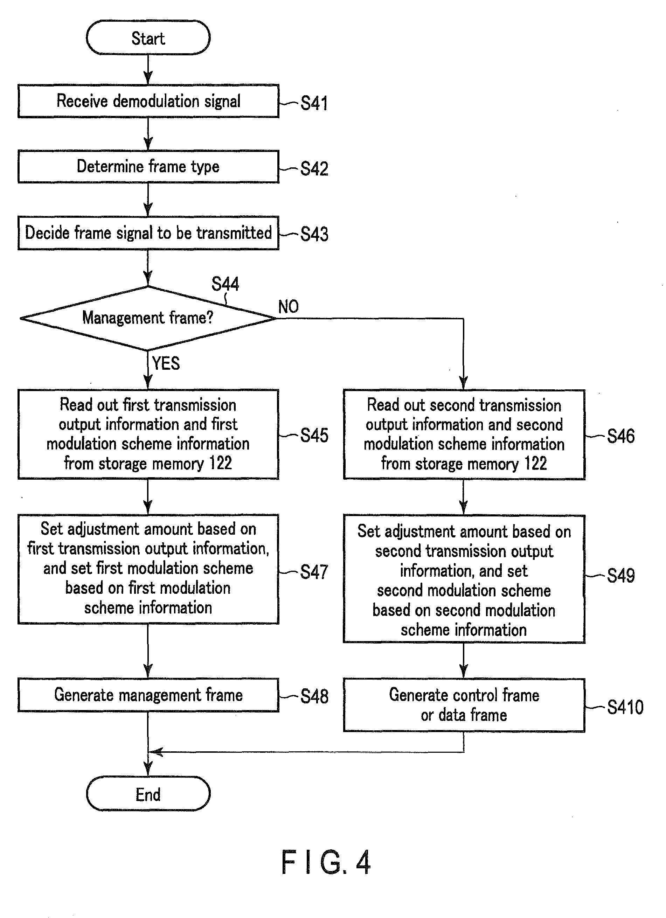

A passive scan mode will be exemplified as an operation when the AP 10 having the above arrangement transmits a data frame to the STA 20. FIG. 3 is a sequence chart when the AP 10 and STA 20 establish a connection and the STA 20 receives a data frame transmitted by the AP 10. FIG. 4 is a flowchart illustrating the operation of the wireless LAN control unit 120 when the AP 10 transmits a management frame, control frame, or data frame in accordance with a signal transmitted by the STA 20.

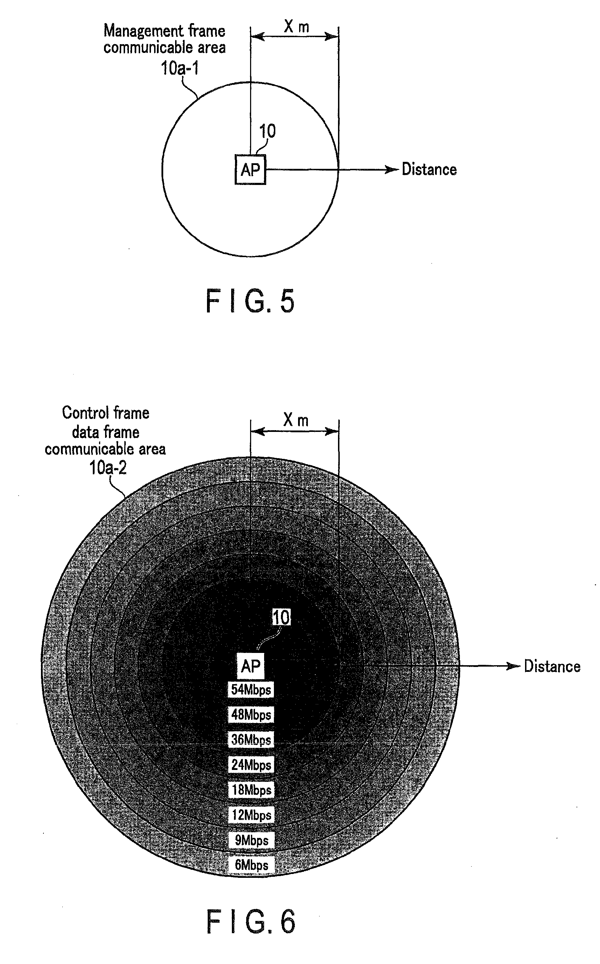

First, to transmit a beacon as a management frame every preset period, the transmission controller 126 reads out the first transmission output information and the first modulation scheme information from the storage memory 122. The transmission output setting unit 124 sets an adjustment amount for the transmission output level adjustment unit 1131 of the baseband processor 113 in accordance with the first transmission output information read out by the transmission controller 126. The modulation scheme setting unit 125 sets the first modulation scheme for the baseband processor 113 in accordance with the first modulation scheme information read out by the transmission controller 126. The transmission controller 126 causes the transmission frame generator 123 to generate a beacon. Consequently, the AP 10 transmits the beacon every preset period (sequence S31). FIG. 5 is a schematic view showing a communicable area 10a-1 formed when the AP 10 transmits the beacon as a management frame. Referring to FIG. 5, the communicable area 10a-1 is formed within a range of a radius of X m from the AP 10.

When the STA 20 enters the communicable area 10a-1, connection establishment processing between the AP 10 and the STA 20 starts. That is, upon receiving the beacon transmitted by the AP 10, the STA 20 transmits a management frame "Authentication" to the AP 10 (sequence S32).

Upon receiving "Authentication" transmitted by the STA 20, the wireless LAN control unit 120 executes processing according to the flowchart shown in FIG. 4. That is, upon receiving a demodulation signal supplied from the baseband processor 113 (step S41), the reception frame determination unit 121 determines the frame type of the received demodulation signal (step S42). In this example, the reception frame determination unit 121 outputs, to the transmission controller 126, reception frame information indicating that the management frame "Authentication" has been received.

With reference to the reception frame information supplied from the reception frame determination unit 121, the transmission controller 126 decides the type of frame signal to be transmitted (step S43). In this example, since "Authentication" has been received, the transmission controller 126 decides to transmit a control frame "Ack" and a management frame "Authentication". The transmission controller 126 determines whether the frame signal decided to be transmitted is a management frame (step S44). The transmission controller 126 performs processes in step S45 and subsequent steps for the management frame "Authentication" (YES in step S44), and performs processes in step S46 and subsequent steps for the control frame "Ack" (NO in step S44).

In step S45, to transmit the management frame "Authentication", the transmission controller 126 reads out the first transmission output information and the first modulation scheme information from the storage memory 122 (step S45). The transmission output setting unit 124 sets an adjustment amount for the transmission output level adjustment unit 1131 of the baseband processor 113 in accordance with the first transmission output information read out by the transmission controller 126. The modulation scheme setting unit 125 sets the first modulation scheme for the baseband processor 113 in accordance with the first modulation scheme information read out by the transmission controller 126 (step S47). The transmission controller 126 causes the transmission frame generator 123 to generate "Authentication" (step S48). Consequently, the AP 10 transmits "Authentication" (sequence S34). Note that the management frame "Authentication" is transmitted to the communicable area 10a-1 shown in FIG. 5.

In step S46, to transmit the control frame "Ack", the transmission controller 126 reads out the second transmission output information and the second modulation scheme information from the storage memory 122 (step S46). The transmission output setting unit 124 sets an adjustment amount for the transmission output level adjustment unit 1131 of the baseband processor 113 in accordance with the second transmission output information read out by the transmission controller 126. The modulation scheme setting unit 125 sets the second modulation scheme for the baseband processor 113 in accordance with the second modulation scheme information read out by the transmission controller 126 (step S49). The transmission controller 126 causes the transmission frame generator 123 to "Ack" (step S410). Consequently, the AP 10 transmits "Ack" (sequence S33). FIG. 6 is a schematic view showing a communicable area 10a-2 formed when the AP 10 transmits the control frame "Ack". The second modulation scheme information is, for example, set to assign a modulation scheme according to the distance from the AP 10. That is, as the distance from the AP 10 is longer, a modulation scheme with a lower transmission rate is set for the baseband processor 113, like 54 Mbps, 48 Mbps,..., 6 Mbps, as shown in FIG. 6. With reference to FIGS. 5 and 6, when the terminal enters the communicable area 10a-1, the AP 10 transmits "Ack" to the STA 20 at a transmission rate of 36 Mbps corresponding to a radius of X m in the communicable area 10a-2.

Referring to FIG. 3, upon receiving "Authentication", the STA 20 returns a control frame "Ack" (sequence S35), and transmits a management frame "Association request" to the AP 10 (sequence S36).

Upon receiving "Association request", the wireless LAN control unit 120 of the AP 10 transmits a control frame "Ack" (sequence S37), and then transmits a management frame "Association response" to the STA 20 (sequence S38).

The STA 20 receives "Association response" and "Ack". Upon receiving "Association response", the STA 20 establishes a communication connection to the AP 10. After establishing the communication connection to the AP 10, the STA 20 transmits a control frame "Ack" to the AP 10 (sequence S39).

Upon receiving "Ack", the AP 10 transmits a data frame "Data" to the STA 20 (sequence S310). By exemplifying IEEE802.11g, the data frame transmitted to the STA 20 is transmitted to the communicable area 10a-2 shown in FIG. 6. That is, with reference to FIGS. 5 and 6, upon establishment of communication when the terminal enters the communicable area 10a-1, the AP 10 starts transmitting the data frame to the STA 20 at a transmission rate of 36 Mbps corresponding to a radius of X m in the communicable area 10a-2. After transmitting data frames corresponding to an amount of information stored in advance, the AP 10 disconnects the communication connection.

As described above, according to this embodiment, the wireless LAN control unit 120 controls a transmission power level for each frame type to be transmitted, thereby individually controlling the size of a communicable area for each frame type. At this time, the wireless LAN control unit 120 sets the transmission power level of the management frame lower than that of the control frame and data frame, so that the communicable area of the management frame is narrower than that of the control frame and data frame. Therefore, when the terminal enters the communicable area of the management frame, it is positioned at a location in the communication area of the control frame and data frame, where a transmission rate is high. This allows the AP 10 to transmit the data frame to the STA 20 at a high transmission rate immediately after a wireless communication connection to the STA 20 is established. Also, by suppressing the communicable area of the management frame to be narrow, the AP 10 can narrow down the number of terminals with which wireless communication is established. Consequently, the AP 10 can decrease the number of terminals to which the transmission band is allocated, thereby transmitting the data frame to the STA 20 at a higher speed. This also prevents a situation in which the terminal passes through only the edge of a wide communication area to disable transmission of data.

Therefore, the wireless communication apparatus according to this embodiment can transfer a large amount of data to the terminal within a short time during which the terminal passes through the communicable area. That is, the wireless communication apparatus according to this embodiment can distribute a large amount of information to attract the user in a limited area such as an area in front of a store.

Note that a case has been exemplified in which the storage memory 122 according to this embodiment stores, in advance, the first transmission output information for instructing x% of the maximum transmission output level and the second transmission output information for instructing y% of the maximum transmission output level. The present invention, however, is not limited to this. For example, assume that there is the second transmission output information for instructing 100% of the maximum transmission output level, and there is an area where a transmission rate equal to or higher than a desired transmission rate is expected in a communicable area formed based on the second transmission output information. In this case, a transmission output level at which a communicable area almost coincides with the area may be set in the first transmission output information.

In the example shown in FIGS. 5 and 6, assume that a transmission rate at which data transfer is preferably performed after establishment of a connection is 36 Mbps, and the communicable area 10a-2 where a transmission rate is 36 Mbps is an area having the AP 10 as its center and a radius of X m. In this case, a transmission output level is set in the first transmission output information so that the communicable area 10a-1 of the management frame is an area having the AP 10 as its center and a radius of X m. This enables the AP 10 and STA 20 to communicate with each other at the desired transmission rate immediately after a wireless communication connection is established.

A case has been explained in which the transmission controller 126 according to this embodiment reads out the first transmission output information from the storage memory 122 when transmitting a management frame, and reads out the second transmission output information from the storage memory 122 when transmitting a control frame and data frame, thereby setting the transmission output level of the management frame to be smaller than that of the control frame and data frame. The present invention, however, is not limited to this. For example, the transmission controller 126 may read out the first transmission output information from the storage memory 122 when transmitting a beacon among management frames, and read out the second transmission output information from the storage memory 122 when transmitting the remaining frames, thereby setting the transmission output level of the beacon to be smaller than that of the remaining frames. This equalizes the transmission output level of the management frames other than the beacon frame to that of the control frame and data frame, and thus it is possible to prevent the occurrence of an error during connection processing.

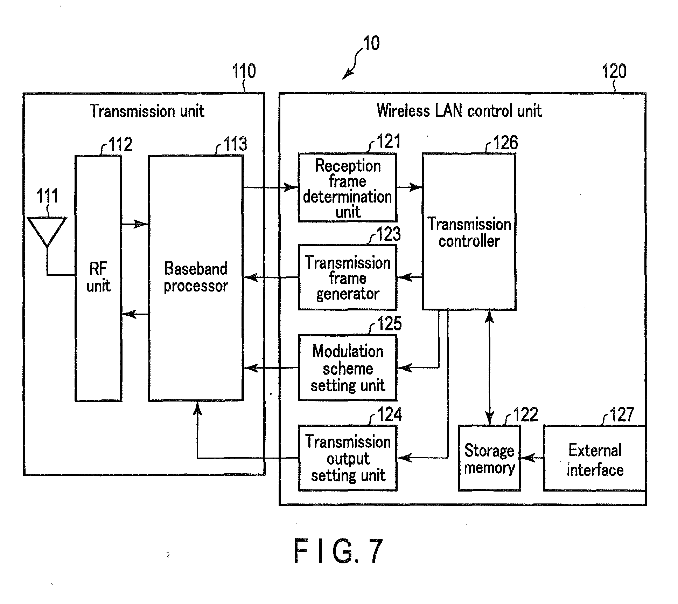

Furthermore, a case has been exemplified in which the storage memory 122 according to this embodiment stores, in advance, transmission output information for each frame type. The present invention, however, is not limited to this. For example, the AP 10 may include an external interface 127, as shown in FIG. 7. A storage medium storing information for updating the transmission output information stored in the storage memory 122 may be connected to the external interface 127. This makes it possible to update the transmission output information stored in the storage memory 122, as needed.

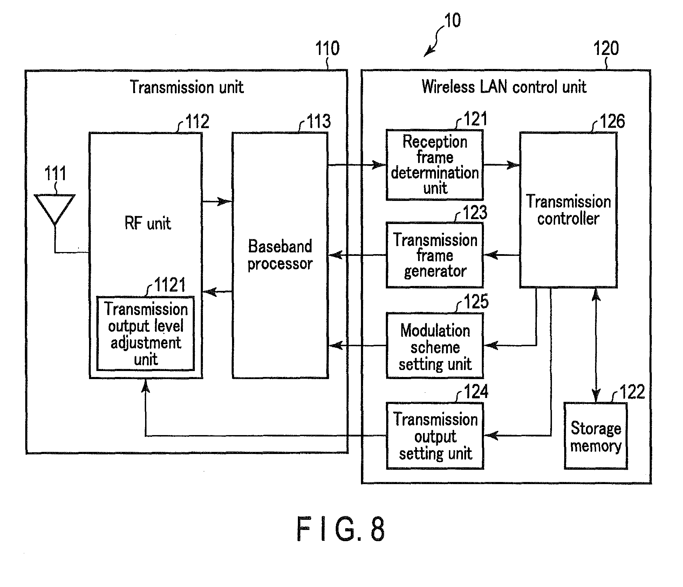

In this embodiment, a case has been exemplified in which the baseband processor 113 includes the transmission output level adjustment unit 1131 to adjust the level of a baseband signal according to the adjustment amount set by the wireless LAN control unit 120. The present invention, however, is not limited to this. As shown in FIG. 8, for example, the RF unit 112 may include a transmission output level adjustment unit 1121. In this case, the transmission output level adjustment unit 1121 adjusts the level of a wireless signal in accordance with an adjustment amount set by the wireless LAN control unit 120.

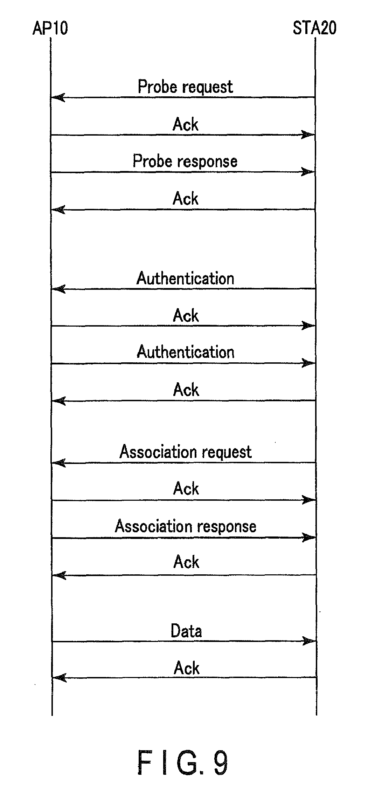

In this embodiment, the passive scan mode has been exemplified as an operation when the AP 10 transmits a data frame to the STA 20. An example of another mode is an active scan mode. In this active scan mode, communication between the AP 10 and the STA 20 is performed, as shown in the sequence of FIG. 9. Note that in the active scan mode, connection starts from a management frame "Prove response" shown in FIG. 9, and thus the transmission output level of "Prove response" may be set smaller than that of other frames.

Furthermore, in this embodiment, a case has been exemplified in which the wireless LAN control unit 120 sets a communicable area whose size is different for each frame by changing a transmission output level for each frame. The present invention, however, is not limited to this. For example, the wireless LAN control unit 120 may set a communicable area whose size is different for each frame by changing a modulation scheme for each frame.

A modulation scheme with a high transmission rate is complex. Therefore, if a wireless signal modulated by a modulation scheme with a high transmission rate is received in an area where the transmission power is low, the wireless signal is processed as noise. That is, when wireless signals are transmitted at the same transmission output level, the communicable area of a wireless signal modulated by a modulation scheme with a higher transmission rate is practically narrower, and the communicable area of a wireless signal modulated by a modulation scheme with a lower transmission rate is practically wider. In this example, this phenomenon is used.

That is, the storage memory 122 stores, in advance, the third modulation scheme information set so that the communicable area is practically narrower than that of the control frame and data frame. When transmitting a management frame, the transmission controller 126 reads out the third modulation scheme information from the storage memory 122. The baseband processor 113 modulates a management frame by a modulation scheme set based on the third modulation scheme information. The AP 10 transmits the management frame modulated by the modulation scheme according to the third modulation scheme information. This enables the AP 10 to set the communicable area of the management frame to be practically narrower than that of the control frame and data frame. Consequently, the AP 10 can transmit a data frame to the STA 20 at a high transmission rate immediately after a wireless communication connection to the STA 20 is established. The AP 10 can narrow down the number of terminals with which wireless communication is established, by suppressing the communicable area of a management frame to be narrow. Consequently, the AP 10 can decrease the number of terminals to which the transmission band is allocated, thereby transmitting a data frame to the STA 20 at a higher speed. Note that the AP 10 may read out the third modulation scheme information from the storage memory 122 when transmitting a beacon frame instead of reading out the third modulation scheme information from the storage memory 122 when transmitting a management frame.

Furthermore, in this embodiment, after transmitting data frames corresponding to an amount of information stored in advance, the AP 10 disconnects the communication connection. This can decrease the number of terminals to which communication connections have been established in the communicable area 10a-1. Therefore, the AP 10 can decrease the number of terminals to which the transmission band is allocated, thereby transmitting a data frame to the STA 20 at a higher speed.

In this embodiment, a case has been exemplified in which after transmitting data frames corresponding an amount of information stored in advance, the AP 10 disconnects the communication connection. The present invention, however, is not limited to this. When the AP 10 cannot receive a signal which is returned by the STA 20 upon receiving a beacon, it may disconnect the communication connection from the STA 20.

A connection control program as a program to be executed by the AP 10 may be recorded in a computer-readable storage medium.

Although an embodiment of the present invention has been described above, it is presented as an example and is not intended to limit the scope of the invention. The embodiment can be implemented in other various forms, and various omissions, replacements, and changes can be made without departing from the scope of the present invention. The embodiment and its modifications are incorporated in the scope and sprit of the present invention, and are also incorporated in the scope of the invention and its equivalents defined in the appended claims.

### Reference Signs List

- 10: AP
- 110: transmission unit
- 111: antenna unit
- 112: RF unit
- 1121, 1131: transmission output level adjustment unit
- 113: baseband unit
- 120: wireless LAN control unit
- 121: reception frame determination unit
- 122: storage memory
- 123: transmission frame generator
- 124: transmission output setting unit
- 125: modulation scheme setting unit
- 126: transmission controller
- 127: external interface
- 20: STA

## Claims

1. A wireless communication apparatus comprising:
a transmission frame generator (123) configured to generate one of a management frame, a control frame, and a data frame for transmitting information via a wireless channel;
a storage memory (122) configured to store a first transmission output level at which the management frame is transmitted, and a second transmission output level which is higher than the first transmission output level and at which the control frame and the data frame are transmitted; and
a controller (126) configured to read out, from the storage memory (122), the transmission output level corresponding to a type of the transmission frame generated by the transmission frame generator (123), and transmit, at the read-out transmission output level, the frame generated by the transmission frame generator (123).

2. The wireless communication apparatus (10) according to claim 1, wherein in accordance with one of the first transmission output level and the second transmission output level, the controller (126) adjusts a baseband processor (113) configured to modulate the frame generated by the transmission frame generator (123).

3. The wireless communication apparatus (10) according to claim 1, wherein in accordance with one of the first transmission output level and the second transmission output level, the controller (126) adjusts an RF unit (112) configured to perform frequency conversion of the frame generated by the transmission frame generator (123).

4. The wireless communication apparatus (10) according to claim 1, wherein the controller (126) disconnects an established communication connection after the completion of transmission of the data frame which has been generated by the transmission frame generator (123) and is transmitted to a terminal (20) connected via the wireless channel.

5. The wireless communication apparatus (10) according to claim 1, wherein the controller (126) disconnects an established communication connection in case that the controller (126) is disable to receive a response signal from a terminal (20) connected via the wireless channel.

6. The wireless communication apparatus (10) according to claim 1, wherein
the controller (126) sets a first modulation scheme in case that the transmission frame generator (123) generates the management frame, and sets, in case that the transmission frame generator (123) generates one of the control frame and the data frame, a second modulation scheme in which a transmission rate changes depending on a distance to a terminal (20) for performing communication, and
the first transmission output level is a level at which a communicable area almost coinciding with an area where a transmission rate not lower than a desired transmission rate is expected is formable in a communicable area of one of the control frame and the data frame.

7. The wireless communication apparatus (10) according to claim 1, further comprising:
an external interface (127),
wherein the storage memory (122) updates at least one of the stored first transmission output level and the stored second transmission output level based on information supplied via the external interface (127).

8. The wireless communication apparatus (10) according to claim 1, wherein the management frame is a beacon frame at the time of a passive scan mode operation.

9. The wireless communication apparatus (10) according to claim 1, wherein the management frame is a probe response frame at the time of an active scan mode operation.

10. A wireless communication apparatus (10) comprising:
a transmission frame generator (123) configured to generate one of a management frame, a control frame, and a data frame for transmitting information via a wireless channel; and
a controller (126) configured to set, when the transmission frame generator (123) generates the management frame, a first modulation scheme of performing modulation so that a communicable area becomes narrower than a communicable area of the control frame and the data frame, and set a second modulation scheme when the transmission frame generator (123) generates the control frame and the data frame.

11. The wireless communication apparatus (10) according to claim 10, wherein the management frame is a beacon frame at the time of a passive scan mode operation.

12. The wireless communication apparatus (10) according to claim 10, wherein the management frame is a probe response frame at the time of an active scan mode operation.

13. A connection control method comprising:
generating one of a management frame, a control frame, and a data frame for transmitting information via a wireless channel;
reading out a first transmission output level stored in a storage memory (122) in transmitting the management frame, and a second transmission output level, which is stored in the storage memory (122) and higher than the first transmission output level, in transmitting the control frame and the data frame; and
transmitting one of the generated management frame, the generated control frame, and the generated data frame at the read-out transmission level.

14. The connection control method according to claim 13, wherein the management frame is a beacon frame at the time of a passive scan mode operation.

15. The connection control method according to claim 13, wherein the management frame is a probe response frame at the time of an active scan mode operation.

16. A connection control program for causing a computer of a wireless communication apparatus (10) to execute
processing of generating one of a management frame, a control frame, and a data frame for transmitting information via a wireless channel;
processing of reading out a first transmission output level stored in a storage memory (122) in transmitting the management frame, and reading out a second transmission output level which is stored in the storage memory (122) and higher than the first transmission output level in transmitting the control frame and the data frame; and
processing of transmitting one of the generated management frame, the generated control frame, and the generated data frame at the read-out transmission level.

17. The connection control program according to claim 16, wherein the management frame is a beacon frame at the time of a passive scan mode operation.

18. The connection control program according to claim 16, wherein the management frame is a probe response frame at the time of an active scan mode operation.
